# EUROPEAN PATENT APPLICATION

(11) **EP 4 717 545 A1**
(43) Date of publication of application: **01.04.2026**
(21) Application number: 24202408.1
(22) Date of filing: 25.09.2024
(51) Int. Cl.: B60W 50/08, B60K 35/23

(54) **ASSISTING A DRIVER OF A VEHICLE**

(71) Applicant: Valeo Comfort and Driving Assistance, 94000 Créteil (FR)
(72) Inventor: Maljian, Joe, 94000 Creteil (FR); Reilhac, Patrice, 74321 Bietigheim-Bissingen (DE); Nguyen, Kevin, 94000 Creteil (FR); Marcasuzaa, Herve, 94000 Creteil (FR); Brice, Nicolas, 94000 Creteil (FR); Robache, Audrey, 74321 Bietigheim-Bissingen (DE); Guirao, Alexandre, 94000 Creteil (FR)
(74) Representative: Jauregui Urbahn, Kristian

(57) **Abstract**

In a computer-implemented method for assisting a driver of a vehicle (1), sensor data representing an environment of the vehicle (1) is received directly or indirectly from at least one environmental sensor system of the vehicle (1). Based on the sensor data, it is determined whether the vehicle (1) is currently in a safe environment according to at least one predefined rule. If it is determined that the vehicle (1) is currently in the safe environment, user parameter, which comprises a request to activate a simulation of a driver assistance function of the vehicle (1), is output to a driver of the vehicle (1). A user input accepting or declining the request is received and, depending on the user input, the simulation of the driver assistance function is carried out.

## Description

The present invention is directed to a computer-implemented method for assisting a driver of a vehicle, wherein sensor data representing an environment of the vehicle is received directly or indirectly from at least one environmental sensor system of the vehicle. The invention is further directed to a data processing system, which is configured to carry out such a computer-implemented method, to a corresponding computer program and to a computer-readable storage medium storing such a computer program.

Many modern vehicles offer various driver assistance functions, also denoted as ADAS (advanced driver assistance system) functions. Nonetheless, drivers do not always know what the ADAS features on their vehicle are entitled to do and how they work. Drivers may find themselves unable to understand the capabilities of the ADAS functions or lack confidence and trust in the system, which may cause them to keep the ADAS deactivated. However, most road accidents are caused by human errors. Therefore, it is desirable to increase the adoption of ADAS functions.

It is an objective of the present invention to provide a possibility to assist a driver of a vehicle at using a driver assistance function of the vehicle.

This objective is achieved by the subject matter of the independent claim. Preferred embodiments and further implementations are subject matter of the dependent claims.

The invention is based on the idea to provide a simulation of the driver assistance function to the driver during the regular operation of the vehicle. In order to avoid dangerous situations or accidents due to a distraction of the driver by the simulation, it is determined in advance whether the vehicle is currently in a safe environment.

According to an aspect of the invention, a computer-implemented method for assisting a driver of a vehicle, in particular a motor vehicle such as a passenger car or a truck or a motorcycle, is provided. Therein, sensor data representing an environment of the vehicle, in particular an outer environment of the vehicle, is received directly or indirectly from at least one environmental sensor system of the vehicle. Based on the sensor data, it is determined whether the vehicle is currently in a safe environment according to at least one predefined rule. If it is determined or only if it is determined that the vehicle is currently in the safe environment, user parameter, which comprises a request to activate a simulation of a driver assistance function of the vehicle, is output to a driver of the vehicle. If a user input accepting the request is received or only if the user input accepting the request is received, the simulation of the driver assistance function is carried out, in particular is started automatically.

Unless stated otherwise, all steps of the computer-implemented method may be performed by a data processing system, which comprises at least one data processing device, in particular a data processing system of the vehicle. In particular, the at least one data processing device is configured or adapted to perform the steps of the computer-implemented method. For this purpose, the at least one data processing device may for example store a computer program comprising instructions which, when executed by the at least one data processing device, cause the at least one data processing device to carry out the computer-implemented method. The terms "data processing system" and "at least one data processing device" may be used interchangeably.

All data processing devices of the at least one data processing device may be comprised by the vehicle. However, it is also possible that all data processing devices of the at least one data processing device are part of an external computing system external to the vehicle, for example a mobile electronic device, a backend server or a cloud computing system. It is also possible that the at least one data processing device comprises at least one vehicle data processing device of the vehicle as well as at least one external data processing device comprised by the external computing system. The at least one vehicle data processing device may for example be comprised by one or more electronic control units, ECUs, and/or one or more zone control units, ZCUs, and/or one or more domain control units, DCUs, of the vehicle and/or by the at least one environmental sensor system.

In case the at least one data processing device comprises two or more data processing devices, certain steps carried out by the at least one data processing device may be understood such that different data processing devices carry out different steps or different parts of a step. In particular, it is not required that each data processing device carries out the steps completely. In other words, carrying out the steps may be distributed amongst the two or more data processing devices.

From each implementation of the computer-implemented method, a respective implementation of a method for assisting a driver of a vehicle, which is not purely computer-implemented, is obtained by including respective steps of generating the sensor data by the at least one environmental sensor system.

For example, an environmental sensor system can be understood as a sensor system, which is able to generate sensor data or sensor signals, which depict, represent or image an environment of the environmental sensor system. In particular, the ability to capture or detect electromagnetic or other signals from the environment, cannot be considered a sufficient condition for qualifying a sensor system as an environmental sensor system. For example, cameras, lidar systems, radar systems or ultrasonic sensor systems may be considered as environmental sensor systems.

Consequently, the sensor data may comprise different types of datasets, for example camera images, point cloud data, radar object lists or other radar data, data from ultrasonic sensor systems, et cetera, depending on the implementation of the at least one environmental sensor system.

That the sensor data is received indirectly from the at least one environmental sensor system may for example be understood such that the sensor data is received from a storage device or a data buffer.

That it is determined based on the sensor data whether the vehicle is currently in the safe environment does not imply that this is determined exclusively based on the sensor data.

In particular, it may be determined based on the sensor data and further information or parameter, whether the vehicle is currently in the safe environment.

Whether a current situation or environment of the vehicle is safe is predefined by the at least one rule. How this at least one rule is actually implemented may vary in different embodiments of the computer-implemented method. The at least one rule may for example specify that the road must be free of other road users in order to determine the presence of the safe environment, et cetera.

Furthermore, determining that the vehicle is currently in the safe environment may be considered as a necessary condition for outputting the user parameter and, consequently, for carrying out the simulation. It may be a sufficient condition as well. Alternatively, there may be one or more further necessary conditions.

Analogously, receiving the user input accepting the request may be considered as a necessary condition for carrying out the simulation, in particular for starting the simulation. Also this may be a sufficient condition or further necessary conditions may be given. If instead of the user input accepting the request a user input declining the request is received or no user input at all is received, then the simulation of the driver assistance function is for example not carried out. The user input accepting the request may for example correspond to touching or pressing or operating a respective user input device such as a button or switch or touch-sensitive area. The user input accepting the request may also correspond to a speech input et cetera. This holds analogously for the user input declining the request.

The driver assistance function may be any driver assistance function, which is implemented in the vehicle or which is not or not yet available in the vehicle. In particular, the driver assistance function may be a function for automatic or semi-automatic lateral and/or longitudinal control of the vehicle.

The driver assistance function may for example comprise a function for adaptive cruise control and/or a lane keeping assistance function and/or a lane departure warning function and/or a lane centering assistance function and/or a lane change assistance function and/or a parking assistance function and/or an automatic emergency braking function.

By carrying out the simulation of the driver assistance function, the driver is, in particular, guided through a process of the driver assistance function, for example with visual and/or acoustic and/or haptic support. Alternatively or in addition, the simulation may comprise actually controlling respective actuators of the vehicle to carry out the driver assistance function. In other words, the simulation of the driver assistance function may comprise a tutorial for the driver. In this way, the driver may be made more familiar with the driver assistance function while driving in a real environment, which may increase the likelihood that the driver will adopt the driver assistance function in regular operation. While the simulation is being carried out, the driver may focus his attention to the simulation and may therefore not always be able to adequately respond to the actual traffic situation. By determining in advance whether the vehicle is currently in the safe environment based on the sensor data of the at least one environmental sensor system, a reduced traffic safety or safety for the driver is avoided.

According to several embodiments, the simulation is carried out at least partially while the vehicle is driving on a road.

Consequently, the simulation is provided to the driver in the real environment, which improves the ability to capture the essential aspects of the driver assistance function. Thus, the likelihood that the driver will adopt the driver assistance function in regular operation is further increased. In particular, also the remaining steps of the computer-implemented method may be carried out at least partially while the vehicle is driving on the road.

According to several embodiments, carrying out the simulation comprises generating an augmented reality representation depending on a video stream received, in particular directly or indirectly, from a camera system of the vehicle. The augmented reality representation comprises virtual content representing one or more aspects of the driver assistance function. The augmented reality representation is displayed on a display device.

In particular, the augmented reality representation comprises the virtual content and real content, which corresponds to the video stream report to a part of the video stream or to a preprocessed version of the video stream.

In this way, the simulation is carried out with a particularly high level of realism, which further increases the likelihood that the driver will adopt the driver assistance function in regular operation.

The camera system of the vehicle may for example comprise a front camera of the vehicle. For example, the camera system may be part of the at least one environmental sensor system. Consequently, the video stream may be part of the sensor data.

The display device is, in particular, part of the data processing system. In general, the display device may be integrated in the vehicle or may be provided separately. In the former case, the display device may be a cluster display, a panoramic screen, a curved panoramic screen or a panoramic windshield display, et cetera. In the latter case, the display device may for example be a smartphone or a tablet computer, et cetera.

According to several embodiments, carrying out the simulation comprises projecting virtual content representing one or more aspects of the driver assistance function onto a windshield of the vehicle.

For example, the data processing system comprises a head-up-display, HUD, for the vehicle. In other words, the driver sees the real environment overlaid with the virtual content and, consequently, it is not required to display the video stream, which reduces the requirements for data transmission and/or buffering. Furthermore, the driver may follow the simulation without changing his regular viewing direction, which further reduces the risk for dangerous situations or accidents.

According to several embodiments, carrying out the simulation comprises controlling one or more actuators of the vehicle to carry out an automatic or semi-automatic longitudinal and/or lateral control of the vehicle according to the driver assistance function.

In this way, a particularly high level of realism of the simulation is achieved.

According to several embodiments, determining whether the vehicle is currently in the safe environment according to the at least one predefined rule comprises determining whether a further road user is present within a predefined range around the vehicle depending on the sensor data. It is determined that the vehicle is currently not in the safe environment if it is determined that a further road user is present within the predefined range around the vehicle.

Consequently, the simulation is not carried out in case a further road user is present within the predefined region around the vehicle. Thus, level of safety is further increased. In some embodiments, any type of road user, for example motor vehicles, emergency vehicles, pedestrians, cyclists, et cetera, is regarded as a further user. In other embodiments, only a subset of all types of road users is considered.

According to several embodiments, determining whether the vehicle is currently in the safe environment according to the at least one predefined rule comprises determining whether an obstacle is present within a predefined range around the vehicle depending on the sensor data. It is determined that the vehicle is currently not in the safe environment if it is determined that an obstacle is present within the predefined range around the vehicle.

Consequently, the simulation is not carried out in case an obstacle is present within the predefined region around the vehicle. Thus, level of safety is further increased. In some embodiments, any type of obstacles, for example construction sites, parked vehicles, et cetera, is regarded as an obstacle. In other embodiments, only a subset of all types of obstacles is considered.

According to several embodiments, determining whether the vehicle is currently in the safe environment according to the at least one predefined rule comprises determining whether the vehicle is currently in a predefined specific environment, for example in a tunnel, a traffic jam, a tolling area, et cetera, depending on the sensor data. It is determined that the vehicle is currently not in the safe environment if it is determined that an obstacle is present within the predefined range around the vehicle.

Consequently, the simulation is not carried out in case the vehicle is currently in the predefined specific environment. Thus, level of safety is further increased.

According to several embodiments, determining whether the vehicle is currently in the safe environment according to the at least one predefined rule comprises determining whether the road is listed as a known road in a memory device, in particular a memory device of the data processing system. It is determined that the vehicle is currently in the safe environment only if it is determined that the road is listed as a known road in the memory device.

In other words, the simulation is not carried out in case the road is not listed as a known road. Thus, level of safety is further increased.

For example, the road on which the vehicle is driving may be identified based on GNSS data received from a GNSS receiver of the vehicle, for example a GPS receiver, and, for example, a digital map. The list of known roads in the memory device may be generated and/or updated manually by the driver and/or automatically by the data processing system based on previous GNSS data received from the GNSS receiver.

According to several embodiments, determining whether the vehicle is currently in the safe environment according to the at least one predefined rule comprises determining whether the vehicle is currently in a predefined operational design domain for the driver assistance function. It is determined that the vehicle is currently in the safe environment only if it is determined that the vehicle is currently in the predefined operational design domain.

In other words, the simulation is not carried out in case the vehicle is currently not in a predefined operational design domain, ODD. Thus, level of safety is further increased and the level of realism is further increased.

The ODD may be defined by operating conditions under which the driver assistance function is specifically designed to operate. This may include environmental, geographical, time of day, general brightness level in the environment, a speed of the vehicle and/or other conditions.

According to several embodiments, a further user input is received, in particular when the simulation has been started or while the simulation is carried out. If the further user input corresponds to a predefined termination input, the simulation is terminated.

Thus, level of safety is further increased. For example, the termination input may be made by the driver by pressing a pedal, for example a brake pedal, of the vehicle, turning a steering wheel of the vehicle, activating a button or switch or another user input device, touching a touch sensitive area, et cetera.

For use cases or use situations which may arise in a computer-implemented method according to the invention and which are not explicitly described herein, it may be provided that, in accordance with the computer-implemented method, an error message and/or a prompt for user feedback is output and/or a default setting and/or a predetermined initial state is set.

According to a further aspect of the invention, a data processing system is provided, which is configured to carry out a computer-implemented method according to the invention.

The terms "data processing system" and "at least one data processing device" may be used interchangeably in the present disclosure. In the present disclosure, a data processing device, also denoted as computing device, may for example be understood as a device with processing circuitry for processing data. A data processing device can therefore perform computing operations in order to process data. An indexed access to a data structure, for example a look-up table, LUT, or a database may also be considered as a computing operation. Data processing that is partially or fully implemented in hardware can also be considered a computing operation.

In particular, a data processing device may include one or more computers, one or more microcontrollers, and/or one or more integrated circuits, for example, one or more application-specific integrated circuits, ASIC, one or more field-programmable gate arrays, FPGA, and/or one or more systems-on-a-chip, SoC. A data processing device may also include one or more processors, for example one or more microprocessors, one or more central processing units, CPU, one or more graphics processing units, GPU, and/or one or more signal processors, in particular one or more digital signal processors, DSP. The data processing device may also include a physical or a virtual cluster of computers or other of said devices.

A data processing device may also comprise one or more hardware and/or software interfaces, for example for receiving and/or providing data, respectively.

A data processing device may also comprise one or more memory devices. Therein, a memory device may be implemented as a volatile memory, for example a dynamic random access memory, DRAM, or a static random access memory, SRAM, or as a nonvolatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

According to a further aspect of the invention, a computer program comprising instructions is provided. When the instructions are executed by a data processing system, the instructions cause the data processing system to carry out a computer-implemented method according to the invention.

The instructions may be provided as program code, for example. The program code can for example be provided as binary code or assembler and/or as source code of a programming language, for example C, and/or as program script, for example Python.

According to a further aspect of the invention, a computer-readable storage medium, in particular a non-transient computer-readable storage medium, storing a computer program according to the invention is provided.

The computer program and the computer-readable storage medium are respective computer program products comprising the instructions.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features, which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
- Fig. 1: shows a schematic view from a cockpit of a vehicle for a first use case of a computer-implemented method for assisting a driver of a vehicle according to the invention;
- Fig. 2: shows a schematic flow diagram of an exemplary embodiment of a computer-implemented method for assisting a driver of a vehicle according to the invention; and
- Fig. 3: shows a schematic view from a cockpit of a vehicle for a second use case of a computer-implemented method for assisting a driver of a vehicle according to the invention.

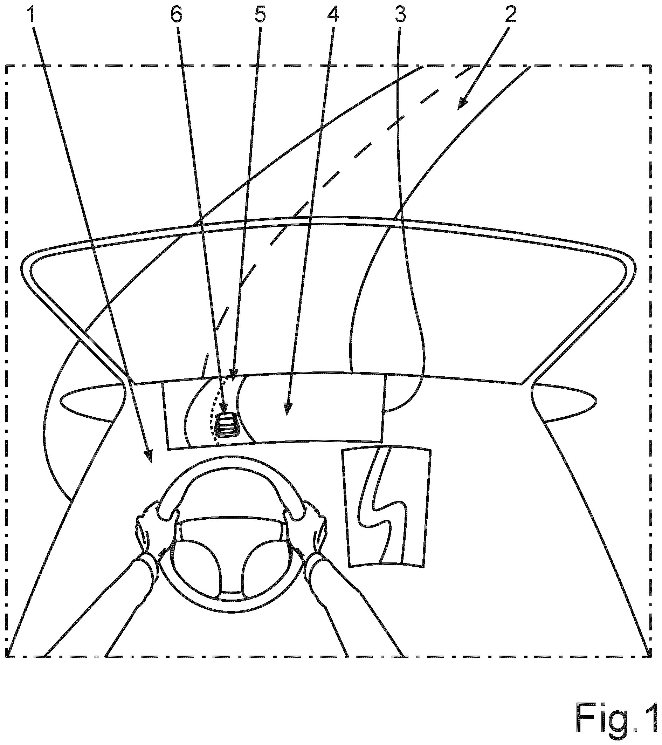

Fig. 1 shows a schematic view from a cockpit of a vehicle 1 comprising an exemplary embodiment of a data processing system according to the invention. The data processing system is configured to carry out a computer-implemented method according to the invention.

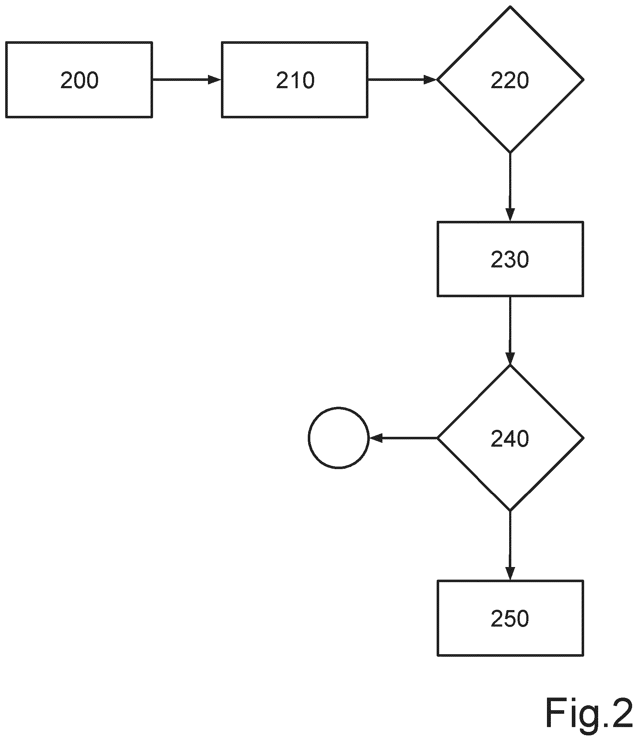

Fig. 2 shows a schematic flow diagram of an exemplary embodiment of a computer-implemented method for assisting a driver of a vehicle 1 according to the invention.

Therein, sensor data representing an environment of the vehicle 1, generated by at least one environmental sensor system of the vehicle 1 in step 200, is received directly or indirectly from the at least one environmental sensor system in step 210. Based on the sensor data, it is determined in step 220, whether the vehicle 1 is currently in a safe environment according to at least one predefined rule. If it is determined that the vehicle 1 is currently in the safe environment, user parameter, which comprises a request to activate a simulation of a driver assistance function of the vehicle 1, is output to a driver of the vehicle 1 in step 230. In step 240, it is determined whether a user input accepting the request is received. If this is the case, the simulation of the driver assistance function is carried out in step 250.

In the example of Fig. 1, carrying out the simulation comprises generating an augmented reality representation 4 comprising virtual content 6 representing one or more aspects of the driver assistance function depending on a video stream 5 received from a camera system of the vehicle 1 driving on a road 2 and displaying the augmented reality representation on a display device 3, which is for example integrated in the vehicle. Alternatively or in addition, the virtual content 6 may be projected onto a windshield of the vehicle 1.

The driver assistance function may for example be an ACC function but is not limited to that. The virtual content may for example comprise a representation of the vehicle 1 and/or a further vehicle and/or further instructive parameter for the driver.

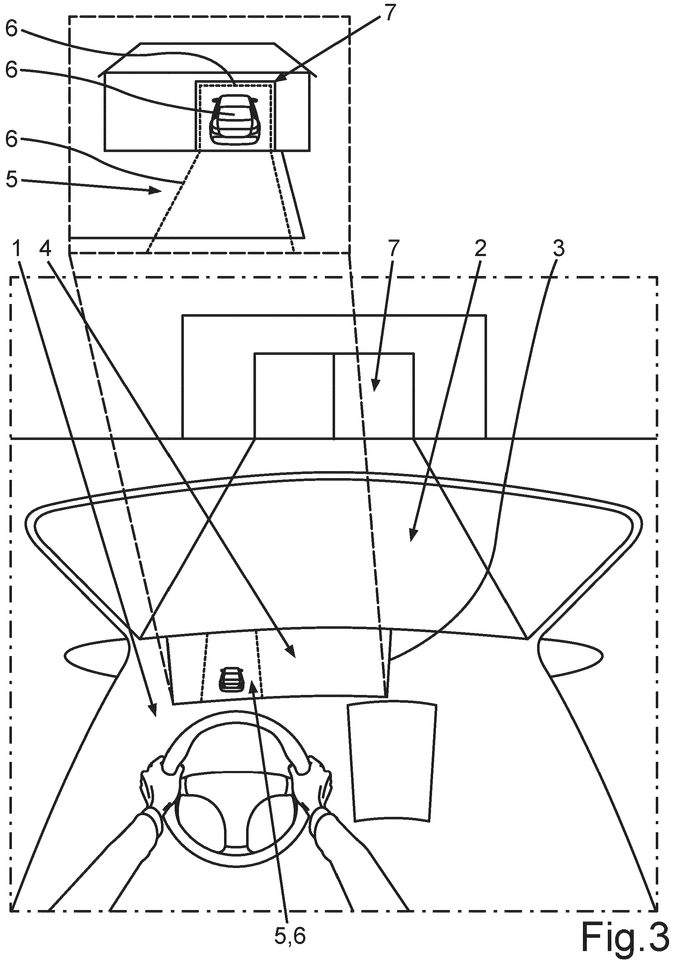

Fig. 3 shows a schematic view from a cockpit of a vehicle 1 for a further use case of a computer-implemented method for assisting a driver of the vehicle 1 according to the invention. In this use case, the driver assistance function may for example be a parking assistance function. For example, the simulation displays the video stream 5 and the virtual content 6 including a virtual representation of the vehicle 1 parking in a garage 7 on a road 2.

In several embodiments of the invention, a virtual environment is displayed by using a real-time video feed of the view in front of the vehicle. This is a video representing the view the driver sees while looking at the road ahead.

In several embodiments of the invention, a ghost object, which is a graphical virtual model, is projected in the virtual environment. The ghost object may for example be a random vehicle model, the model of the ego vehicle, or a model of a vulnerable road user, VRU, such as a pedestrian, a motorcycle rider, a cyclist, a child, an elderly person, et cetera. The driver may for example choose to include several ghost objects in the virtual environment to simulate specific scenarios.

The proposed solution may be used for various purposes including suggesting tutorials and/or training for driver assistance functions, learning about the driver's preferences, and assisting the driver to perform a certain maneuver manually.

Exemplary scenarios in the simulation may include a ghost vehicle blocking the lane in the virtual environment activating the ADAS on the ego vehicle to perform a lane change in real-life, a ghost vehicle stopping in the lane in the virtual environment activating the ADAS on the ego vehicle to perform an emergency braking in real-life, a ghost pedestrian or child suddenly crossing the street or running across the street in the virtual environment activating the ADAS on the ego vehicle in real-life, et cetera.

In several embodiments, messages to inform the driver of the state of the assistance may be generated. The messages can be voice messages, visual messages or audio-visual messages, for example.

In several embodiments, the display device on which the virtual environment and the ghost object are projected in real-time may for example be a cluster display, an augmented reality HUD, a panoramic screen, a curved panoramic screen or a panoramic windshield display.

In several embodiments, first the vehicle's ability to activate the driver assistance function is determined by ensuring that the road is empty and/or that the road is familiar to the driver. Also the ODD availability of the driver assistance function may be checked to assess if the driver assistance function feature can be activated.

In several embodiments, when the driver is on an empty and familiar road, a digital assistant suggests the driver to start a tutorial on a certain driver assistance function, which the driver has not used before or has not been used lately. At this point, the driver may be asked for authorization to launch the process. For example, this could be done by giving the driver the ability to accept the simulation, for example by pushing a button or the like. Once the driver accepts the process, a real case scenario is simulated.

In several embodiments, the driver is guided through the entire process by the digital assistant. At any point, the driver may deactivate the process, for example, by steering or pressing on the brake pedal.

In several embodiments, tutorials and/or training helps to improve the driver's experience by helping them understand ADAS features and enabling them to gain confidence in using them. For example, a driver assistance system projects one or more ghost objects in the virtual environment. Therefore, a simulation of how the vehicle would behave if the same scenario happened in real-life is provided.

In several embodiments, the solution uses hardware already installed on the vehicle and is only based on software. It may therefore be used to train on ADAS features that will be introduced, via OTA updates for example, and which are not necessarily available yet on the vehicle. The tutorials and training may further be updated through OTA updates.

In several embodiments, the system may learn about the driver's preferences, reactions, and behaviors to adapt and personalize the driver assistance function for each individual driver. The adaptation and personalization may include the activation and/or deactivation of specific ADAS features depending on driver preferences. For example, some drivers might prefer to get driving assistance such as a lane departure warning whereas others prefer to get a lane keeping assistance. The system may learn about the driver's preferences while simulating a real-case scenario to ensure safety and minimize the risk of accidents and adapts the settings of the driver assistance function the vehicle accordingly.

In several embodiments, tutorials happen in real-time and during regular operation of the vehicle. This gives the driver a feeling of how the vehicle would behave when the driver assistance function would actually be activated. This way the driver has a realistic feeling of the acceleration or braking behavior as well as the behavior of steering and suspension.

In several embodiments, a complex situation on the road ahead is detected and a suitable driver assistance function is suggested to the driver. Alternatively, the driver may manually activate the process when faced with a complex situation. The ODD availability may be checked to assess if the driver assistance function can be activated. If driver assistance function can be activated, the system may take control over the driving while showing the ghost objects and the virtual environment on the display and sending the appropriate messages to the driver. If the driver assistance function is not available, the driver may keep operating the vehicle while the driver assistance system shows the ghost and the virtual environment on the display and sends the appropriate messages to the driver.

In several embodiments, the driver may be assisted to perform a maneuver and it may be assessed if the forward maneuvering space is consistent with a safe maneuver. In this case, a ghost object representing the vehicle itself may be projected in the virtual environment.

## Claims

1. Computer-implemented method for assisting a driver of a vehicle (1), wherein
- sensor data representing an environment of the vehicle (1) is received directly or indirectly from at least one environmental sensor system of the vehicle (1);
- based on the sensor data, it is determined whether the vehicle (1) is currently in a safe environment according to at least one predefined rule;
- if it is determined that the vehicle (1) is currently in the safe environment, user parameter, which comprises a request to activate a simulation of a driver assistance function of the vehicle (1), is output to a driver of the vehicle (1);
- if a user input accepting the request is received, the simulation of the driver assistance function is carried out.

2. Computer-implemented method according to claim 1, wherein carrying out the simulation comprises generating an augmented reality representation (4) comprising virtual content (6) representing one or more aspects of the driver assistance function depending on a video stream (5) received from a camera system of the vehicle (1) and displaying the augmented reality representation on a display device (3).

3. Computer-implemented method according to claim 2, wherein the display device (3) is integrated in the vehicle (1).

4. Computer-implemented method according to claim 1, wherein carrying out the simulation comprises projecting virtual content (6) representing one or more aspects of the driver assistance function onto a windshield of the vehicle (1).

5. Computer-implemented method according to one of the preceding claims, wherein carrying out the simulation comprises controlling one or more actuators of the vehicle (1) to carry out an automatic or semi-automatic longitudinal and/or lateral control of the vehicle (1) according to the driver assistance function.

6. Computer-implemented method according to one of the preceding claims, wherein the simulation is carried out at least partially while the vehicle (1) is driving on a road (2).

7. Computer-implemented method according to claim 6, wherein
- determining whether the vehicle (1) is currently in the safe environment according to the at least one predefined rule comprises determining whether the road (2) is listed as a known road (2) in a memory device; and
- it is determined that the vehicle (1) is currently in the safe environment only if it is determined that the road (2) is listed as a known road (2) in the memory device.

8. Computer-implemented method according to one of the preceding claims, wherein
- determining whether the vehicle (1) is currently in the safe environment according to the at least one predefined rule comprises determining whether a further road (2) user is present within a predefined range around the vehicle (1) depending on the sensor data; and
- it is determined that the vehicle (1) is currently not in the safe environment if it is determined that a further road (2) user is present within the predefined range around the vehicle (1).

9. Computer-implemented method according to one of the preceding claims, wherein
- determining whether the vehicle (1) is currently in the safe environment according to the at least one predefined rule comprises determining whether the vehicle (1) is currently in a predefined operational design domain for the driver assistance function; and
- it is determined that the vehicle (1) is currently in the safe environment only if it is determined that the vehicle (1) is currently in the predefined operational design domain.

10. Computer-implemented method according to one of the preceding claims, wherein further user input is received and if the further user input corresponds to a predefined termination input, the simulation is terminated.

11. Computer-implemented method according to one of the preceding claims, wherein the driver assistance function comprises a function for adaptive cruise control and/or a lane keeping assistance function and/or a lane departure warning function and/or a lane centering assistance function and/or a lane change assistance function and/or a parking assistance function and/or an automatic emergency braking function.

12. Data processing system, which is configured to carry out a computer-implemented method according to one of the preceding claims.

13. Computer program comprising instructions, which, when executed by a data processing system, cause the data processing system to carry out a computer-implemented method according to one of claims 1 to 11.

14. Computer-readable storage medium storing a computer program according to claim 13.
